# EUROPÄISCHE PATENTSCHRIFT

(11) **EP 1 048 619 B1**
(45) Veröffentlichungstag und Bekanntmachung des Hinweises auf die Patenterteilung: **10.08.2005**
(21) Anmeldenummer: 00107992.0
(22) Anmeldetag: 18.04.2000
(51) Int. Cl.: C01G 49/08, C09C 1/24

(54) **Verfahren zur Herstellung von Fällungsmagnetiten**
Process for producing magnetite
Procédé de fabrication de magnétite

(30) Priorität: 30.04.1999 DE 19919791
(43) Veröffentlichungstag der Anmeldung: 02.11.2000
(73) Patentinhaber: LANXESS Deutschland GmbH, 51368 Leverkusen (DE)
(72) Erfinder: Meisen, Ulrich, Dr., 53925 Kall (DE)

(56) Entgegenhaltungen:
- EP-A- 0 187 331
- DE-A- 2 460 493
- DE-A- 19 702 431
- US-A- 4 992 191
- US-A- 5 733 471

## Beschreibung

Diese Erfindung betrifft ein Verfahren zur Herstellung von Magnetitteilchen. Diese werden bei der Herstellung von Tonern verwendet.

Teilchenförmige Magnetite, die durch Fällverfahren aus wässrigen Lösungen hergestellt werden, sind seit langem bekannt. Aus US-A-0 802 928 (Fireman, 1905) ist bereits die Herstellung von Magnetit durch Fällung von Eisen-II-sulfat mit einer alkalischen Komponente und anschließender Oxidation mit Luft bekannt geworden. Ausgehend von dieser Basiserfindung wurden seit dem zahlreiche Patente zur Herstellung von Magnetiten nach dem Fällungsverfahren erteilt.

Diese Materialien fanden zunächst zur Herstellung von Farben aller Art Anwendung. Der besondere Vorteil von Magnetiten gegenüber organischen Farbstoffen und Ruß liegt in seiner sehr viel besseren Wetterbeständigkeit, so dass derartige Farben auch im Außenbereich angewendet werden können.

Weiterhin werden Fällungsmagnetite zur Einfärbung von Betonformteilen, wie Betonpflastersteinen oder Betondachsteinen eingesetzt.

Seit geraumer Zeit werden Magnetite auch in der Elektrofotographie zur Herstellung von Tonern eingesetzt. Zur Herstellung von Tonern für Kopiergeräte mit Einkomponententonern werden besonders bevorzugt Magnetite, die nach dem Fällungsverfahren hergestellt werden eingesetzt. Hierfür eingesetzte magnetische Toner müssen bestimmte Eigenschaften aufweisen.

Mit fortschreitender Entwicklung und Verbesserung der Kopiergeräte und Drucker wurden die Anforderungen an den magnetischen Toner und folglich an den hierfür verwendeten Magnetit immer höher. Die neueste Druckergeneration erreicht eine Auflösung von mehr als 400 dpi (Punkte pro Zoll), was zur Entwicklung feinteiliger Toner mit sehr enger Teilchengrößenverteilung geführt hat.

Dies hat zur Folge, dass die hierfür erforderlichen Magnetite eine sehr enge Teilchengrößenverteilung aufweisen müssen. Weiter ist eine bestimmte Teilchengröße erforderlich, so dass eine homogene Verteilung der Magnetitteilchen im fertigen Toner gewährleistet ist. Die Magnetite selbst müssen einen ausreichend hohen elektrischen Widerstand haben um das latente Bild während der elektrostatischen Übertragung zu stabilisieren.

Weiterhin müssen Koerzitivkraft, Sättigungsmagnetisierung und vor allem die remanente Magnetisierung im richtigen Verhältnis zu den in der Maschine herrschenden Feldstärken sein. Es ist also erforderlich, für jede Klasse von Kopiergeräten Toner und damit Magnetite mit speziellen Eigenschaften zu entwickeln.

Es besteht daher Bedarf an einem Verfahren zur Herstellung von Magnetiten, die Eigenschaften aufweisen, die sie zum Einsatz in Farben zur Einfärbung von Papier, Kunststoff, Lacken, Fasern und Beton ebenso geeignet machen wie zur Herstellung von magnetischen Tonern.

Die Herstellung von Magnetiten nach dem Fällungsverfahren unter Zusatz von Silicium wird in JP-A-51.044 298 (Showa) beschrieben. Reine Fällungsmagnetite ohne Zusatz von Fremdelemente können nach DE-A-3 209 469 diskontinuierlich oder nach DE-A-2 618 058 kontinuierlich hergestellt werden. Bei den oben genannten Patenten wird FeSO₄ als Eisen-II-salz eingesetzt.

Es ist jedoch auch möglich, zur Herstellung eines Magnetits nach dem Fällungsverfahren jegliches lösliche Eisen-II-salz einzusetzen. Insbesondere kommt hier der Einsatz von FeCl₂, wie in DE-A- 3 004 718 beschrieben, in Frage. Der Einsatz von FeSO₄ oder FeCl₂ hat den Vorteil, dass beide Stoffe in großen Mengen sehr preiswert als Nebenprodukte der eisenverarbeitenden Industrie bezogen werden können. Als Fällungsmittel kommt neben dem am häufigsten eingesetzten Natriumhydroxid auch CaO oder CaCO₃ (DE-A-3 004 718), Ammoniak (DE-A-2 460 493) oder Na₂CO₃, MgCO₃ oder MgO (EP-A-0 187 331) verwendet werden. Als Oxidationsmittel wird in der Regel Luft eingesetzt.

Es werden jedoch auch Verfahren zur Oxidation mit Nitraten (DD-A-0 216 040 und DD-A-0 284 478) beschrieben.

Für die Anwendung in magnetischen Tonern ist die Herstellung Si-haltiger Magnetite besonders vorteilhaft. Diese haben ein anderes Ladungsverhalten als reine Magnetite und weisen bei gleicher Teilchengröße eine höhere thermische Stabilität auf. Ein Verfahren zur Herstellung derartiger Teilchen wird in JP-A-61.034 070 (Showa) beschrieben. Hierbei wird die Si-Komponente zum Eisen-II-sulfat gegeben, was zu Ausfällungen von Kieselsäure und damit zu einer ungleichmäßigen Verteilung des Si im Magnetitgitter führt.

In US-A-4 992 191 wird ein Magnetit mit 0.1 bis 5.0 Atom-% Si bezogen auf Fe beschrieben, der für die Herstellung von Tonern besonders geeignet sein soll. Wichtig ist hierbei besonders, ob das Si oberflächlich angereichert ist, wie in EP-A-0 808 801 beschrieben, oder ob es gleichmäßig über das gesamte Teilchen verteilt ist. Weiterhin sind anorganische Oberflächenmodifizierungen aus US-A-5 688 852 bekannt geworden. Hier werden neben Si die Elemente Al, Zr und Ti in Form ihrer Oxide oder Hydroxide eingesetzt. Daneben sind auch organische Nachbehandlungen bekannt geworden, wie sie beispielsweise ist EP-A-0 750 233 beschrieben werden. Hier spielen besonders titanhaltige Ester langkettiger Fettsäuren eine Rolle.

Die Teilchengröße und Teilchenform der Magnetite kann durch den Fällungs-pH gesteuert werden. Bei hohen pH-Werten und entsprechend niedrigen Werten für das Verhältnis Fe-II/NaOH (kleiner als 0.47) erhält man Oktaeder. Diese Teilchen haben die relativ höchste Koerzitivkraft und Remanenz. Fällt man die Magnetite im Bereich des Fe-II/NaOH-Verhältnisses von mehr als 0.48, so erhält man zunehmend runde Teilchen, die sich durch sehr niedrige Remanenz auszeichnen. Weiterhin sind diese Teilchen generell, im Vergleich mit den bei anderen pH-Werten hergestellten Magnetiten, relativ feinteilig. Diese Zusammenhänge wurden bereits 1974 von Kiyama erkannt (Bull. Chem. Soc. Japan, 47(7), 1974, 1646-50).

Ein weiteres Mittel, feinteiligere Magnetite herzustellen, ist das Absenken der Fäll- und Reaktionstemperatur. Aus der oben angegebenen Arbeit von Kiyama ist bekannt, dass das Existenzgebiet von Fe₃O₄ mit fallender Temperatur kleiner wird. Reiner Magnetit wird hiernach bei Fe-II/NaOH-Verhältnissen von 0.55 bis 0.45 bei einer Temperatur von 50°C gebildet. Steigt die Fäll- und Reaktionstemperatur, so erweitert sich das Existenzgebiet des Magnetits. Besonders im Alkalischen wird bei höheren Temperaturen Magnetit erhalten.

Ein weiterer wichtiger Einflussfaktor bei der Herstellung von Fällungsmagnetiten ist das Oxidationsmittel. Im Falle von Luftsauerstoff hängt die Effizienz von der Verteilung der Luftblasen in der Suspension ab. Generell nimmt mit steigendem Luftstrom die Tendenz zur Bildung des thermodynamisch stabileren Goethits zu.

Will man feinteilige Magnetite herstellen, so ist es erforderlich, ein Verfahren zu entwickeln, das alle oben aufgeführten Tatsachen berücksichtigt. Weiterhin ist wichtig, dass eventuelle Zusätze (z.B. Si oder andere Metalle) die Bildungstendenz von Magnetit stark verschieben können.

Der vorliegenden Erfindung lag daher die Aufgabe zugrunde, ein Verfahren zur Herstellung von Magnetiten zu entwickeln, die speziell für die Anwendung in feinteiligen Einkomponententonern geeignet sind. Derartige Magnetite müssen neben geringer Teilchengröße (ca. 0.1 µm) eine niedrige Remanenz, eine niedrige Koerzitivkraft und eine ausreichend hohe Temperaturstabilität aufweisen.

Derartige Magnetite müssen weiterhin enge Teilchengrößenverteilungen aufweisen.

Diese Aufgabe wird durch die Bereitstellung des folgenden Verfahrens gelöst:
1. Vorlegen einer alkalischen Komponente unter Schutzgasdurchleitung
2. Zugabe der Silikatkomponente
3. Erwärmen dieser Mischung unter Rühren auf Fälltemperatur
4. Zudosieren einer Eisen-II-Komponente
5. Erwärmen auf Reaktionstemperatur
6. Oxidieren mit einem Oxidationsmittel bis zu einem Fe-III-Gehalt von mehr als 65 mol-%.

Gegenstand der Erfindung ist daher ein Verfahren zur Herstellung von Fällungsmagnetiten mit einer spezifischen Oberfläche von 9 bis 15 m²/g, einer Koerzitivkraft von 45 Oe ≙ 3.58 KA/m bis 75 Oe ≙ 5.97 KA/m, einer Teilchengröße von ca. 0,1 µm und einer Schüttdichte von 1.1 bis 1.3 g/cm³, das die folgenden Schritte umfasst:
a. Eine alkalischen Komponente wird in Form einer wässrigen Lösung unter Schutzgas vorgelegt,
b. eine Silikatkomponente wird in einer Menge von 1.0 - 3.0 mol-% bezogen auf Fe, bevorzugt 1.7 - 2.5 mol-% Fe bezogen auf Fe zugegeben,
c. es wird auf eine Fälltemperatur von 60 - 80 °C, bevorzugt auf 65 - 75 °C, aufgeheizt,
d. eine Eisen-II-Komponente wird mit einer Geschwindigkeit von 0.5 - 1.5 mol Fe/h pro Äquivalent des Fällungsmittels bis zu einem pH-Wert der Suspension von 7.0 bis 8.5, bevorzugt 7.2 - 7.6 zugegeben,
e. die Oxidation der Suspension wird mit einem Oxidationsmittel mit einer Geschwindigkeit von 20 - 5 mol-% Fe-II/h, bevorzugt 14 - 10 mol-% Fe-II/h, bis zu einem Fe-III-Gehalt von 65 - 75 mol-% Fe-III durchgeführt.

Als alkalische Komponente kann ein Alkalihydroxid, ein Erdalkalihydroxid, ein Erdalkalioxid, ein Alkalicarbonat, MgCO₃ oder Ammoniak eingesetzt werden. Als Silikatkomponente wird typischerweise ein wasserlösliches Alkalisilicat verwendet. Eisen-II wird typischerweise in Form einer wasserlöslichen Fe-II-Komponente eingesetzt, wobei besonders bevorzugt FeSO₄ oder FeCl₂ Anwendung finden. Es ist jedoch auch möglich, andere wasserlösliche Fe-II-Verbindungen einzusetzen.

Als Oxidationsmittel können Luftsauerstoff, reiner Sauerstoff, H₂O₂, Alkalimetallchlorate(V), Alkalimetallchlorate(VII), Chlor oder Nitrate eingesetzt werden. Aus wirtschaftlichen Gründen werden besonders bevorzugt Luftsauerstoff, reiner Sauerstoff, H₂O₂ oder Natriumnitrat eingesetzt.

Bei der Oxidation ist zu beachten, dass die Oxidationsgeschwindigkeit nicht zu hoch gewählt wird, da dann unerwünschtes α-FeOOH als zweite Verbindung gebildet wird. Die Oxidationsgeschwindigkeit sollte zwischen 20 und 5 mol-% Fe-II/h liegen. Diese Oxidation bezieht sich auf einen stöchiometrischen Magnetit mit 33.3 mol-% Fe-II. Um aus einer reinen Fe-II-Lösung einen derartigen Magnetit herzustellen sind also nur 66.6 % des Fe-II zum Fe-III zu oxidieren.

Wird eine Charge mit 10 mol Fe-II-sulfat also in 5h zum Magnetit oxidiert, so ergibt sich eine Oxidationsgeschwindigkeit von 20mol-% Fe-II/h, da die zu oxidierende Fe-II-Menge bei 6.66 mol liegt.

Eine besonders bevorzugte Ausführungsform zur Herstellung des beanspruchten Magnetits ist folgende:

Natronlauge mit einem Gehalt von 300 g NaOH pro Liter wird in einem diskontinuierlichen Rührkessel unter Rühren und Schutzgasdurchleitung vorgelegt. Zu dieser Natronlauge wird die festgelegte Menge Natriumsilicat mit einem Gehalt von 125 g/l Si zugegeben. Anschließend wird auf die angestrebte Fälltemperatur aufgeheizt. Ist die Fälltemperatur erreicht, so wird mit einer Eisen-II-salzlösung (z.B. FeSO₄) gefällt, bis der angestrebte pH-Wert erreicht ist.

Die Fälltemperatur liegt dabei zwischen 60 und 80°C bevorzugt zwischen 65 und 75 °C. Als Eisen-II-komponente wird FeSO₄- oder FeCl₂-Lösung eingesetzt. Diese Lösung hat einen Fe-Gehalt von 60-180 gFe/l bevorzugt 65 - 120 g, bevorzugt 80-95 gFe/l. Der Fe-III-Gehalt der Lösung liegt zwischen 0.2 und 1.2 mol-% bevorzugt zwischen 0.3 und 0.6 mol-% Fe-III. Der angestrebte pH-Wert liegt zwischen 7.0 und 8.5 bevorzugt zwischen 7.2 und 7.6.

Die Dosierung der Fe-II-Komponente erfolgt mit einer Geschwindigkeit von 0.5 bis 1.5 mol Fe/h pro Äquivalent des Fällungsmittels. Nachdem die Zugabe der Menge der Fe-II-Komponente beendet wurde, wird auf Reaktionstemperatur aufgeheizt. In vielen Fällen sind Fälltemperatur und Reaktionstemperatur identisch, so dass ein besonderer Aufheizschritt nicht erforderlich ist.

Ist die Reaktionstemperatur erreicht, so wird die Schutzgasbegasung beendet und mit der Zugabe des Oxidationsmittels begonnen. Im Falle einer Luftbegasung wird Luft über eine Begasungsvorrichtung unterhalb des Rührers eingeleitet. Die gewählte Oxidationsgeschwindigkeit liegt zwischen 20 und 5 mol-% Fe-II/h, bevorzugt zwischen 14 und 10 mol-% Fe-II/h.

Die Messung der Eigenschaften der fertigen Magnetite erfolgt nach den unten beschriebenen Methoden.
1. Die Magnetwerte (Koerzitivkraft, spezifische Sättigungsmagnetisierung, spezifische remanente Magnetisierung) werden am Probenvibrationsmagnetometer bei 5000 Oe ≙ 397.9 KA/m Feldstärke gemessen.
2. Die BET-Oberfläche wird nach DIN 66 131 gemessen. Gasgemisch: 90 % He, 10 % N2, Messtemperatur: 77.4 K, Ausheizen bei 140°C, 60 Minuten.
3. Elementanalyse Si: Si wird spektralanalytisch durch ICP-OES bestimmt.
4. Elementanalyse Fe, Fe-II, Fe-III: Bestimmungen nach DIN 55 913. Der Fe-II-Gehalt wird durch Titration mit KMnO₄ mittels eines Memotitrators (Mettler DL-70) ermittelt. Fe-III wird analog mit TiCl₃ bestimmt. Der Gesamteisengehalt wird aus den beiden Einzelwerten und der Einwaage errechnet. Die Bestimmung der Gehalte der beiden Maßlösungen erfolgt täglich.
5. Teilchenform, Teilchengröße: Abschätzung der Teilchengröße- und Form aus einer transmissionsmikroskopischen (TEM) Aufnahmen bei einer Vergrößerung von 30.000.
6. Bestimmung der Schüttdichte: Die Schüttdichte wird nach ISO 787 bestimmt.

### Beispiele

### Beispiel 1

In einen Rührkessel von 100 m³ Nutzvolumen wurden 8000 kg Natronlauge mit einem Gehalt von 300 g/l, was 200 kmol NaOH entspricht gegeben. Zu dieser Natronlauge werden 2 kmol Si als Wasserglaslösung mit einem Gehalt von 170 g Si/l gegeben.

Nach Einschalten der Stickstoffbegasung und des Rührers wurde die Lösung auf 70°C aufgeheizt. In 51 Minuten wurden anschließend 54.25 m³ Eisen-II-sulfatlösung mit einem Gehalt von 103 g Fe/l zugepumpt. Die Fällgeschwindigkeit betrug demnach 0.589 mol Fe/h·mol NaOH.

Der Fe-III-Gehalt der Eisensulfatlösung entsprach 0.42 mol-% Fe-III. Nach Beendigung der Zugabe stellte sich ein pH-Wert von 7.4 (gemessen bei 70°C) ein. Dann wurde die Stickstoffbegasung abgestellt und mit 200 m³/h Luft über einen unter dem Rührer angebrachten Begasungsring begast. Die Begasung wurde nach 7.5 h, nachdem ein Fe-III-Gehalt von 67.3 mol-% erreicht war, abgebrochen. Die Oxidationsgeschwindigkeit betrug demnach 13.33 mol-% Fe-II/h.

Nach Beendigung dieser Reaktion wurde die Suspension filtriert, mit vollentsalztem Wasser gründlich gewaschen und bei 80°C unter Luft getrocknet. Das erhaltene Pulver wurde in einer Prallmühle gemahlen.

Der erhaltene Magnetit hatte folgende Eigenschaften:

| | | |
|---|---|---|
| Si-Gehalt | 0.72 Gew-% | |
| Koerzitivkraft | 74 Oe | ≙ 5.89 KA/m |
| spez. Remanenz | 156 Gcm³/g | ≙ 15.6 nTm³/g |
| spez. Sättigungsmagnetisierung | 1071 Gcm³/g | ≙ 107.1 nTm³/g |
| Teilchengröße | 0.1 µm | |
| BET-Oberfläche | 14.3 m²/g | |
| Schüttdichte | 1.15 g/cm³ | |

### Beispiel 2

In einen Rührkessel von 100 m³ Nutzvolumen wurden 8000 kg Natronlauge mit einem Gehalt von 300 g/l, was 200 kmol NaOH entspricht, gegeben. Zu dieser Natronlauge wurden 2.4 kmol Si als Wasserglaslösung mit einem Gehalt von 170 g Si/l gegeben.

Nach Einschalten der Stickstoffbegasung und des Rührers wurde die Lösung auf 70°C aufgeheizt. In 51 Minuten wurden anschließend 59.25 m³ Eisen-II-sulfatLösung mit einem Gehalt von 96 g Fe/l zugepumpt. Der Fe-III-Gehalt der Eisensulfatlösung entsprach 0.51 mol-% Fe-III. Die Fällgeschwindigkeit betrug demnach 0.599 mol Fe/h·mol NaOH.

Nach Beendigung der Zugabe stellte sich ein pH-Wert von 7.1 (gemessen bei 70°C) ein. Dann wurde die Stickstoffbegasung abgestellt und mit 200 m³/h Luft über einen unter dem Rührer angebrachten Begasungsring begast. Die Begasung wurde nach 8.5 h abgebrochen nachdem ein Fe-III-Gehalt von 67.0 mol-% erreicht war. Die Oxidationsgeschwindigkeit betrug demnach 11.76 mol-% Fe-II/h.

Nach Beendigung dieser Reaktion wurde die Suspension filtriert, mit vollentsalztem Wasser gründlich gewaschen und bei 80°C unter Luft getrocknet. Das erhaltene Pulver wurde in einer Prallmühle gemahlen.

Der erhaltene Magnetit hatte folgende Eigenschaften:

| | | |
|---|---|---|
| Si-Gehalt | 0.79 Gew-% | |
| Koerzitivkraft | 67 Oe | ≙ 5.33 KA/m |
| spez. Remanenz | 146 Gcm³/g | ≙ 14.6 nTm³/g |
| spez. Sättigungsmagnetisierung | 1065 Gcm³/g | ≙ 106.5 nTm³/g |
| Teilchengröße | 0.1 µm | |
| BET-Oberfläche | 12.3 m²/g | |
| Schüttdichte | 1.12 g/cm³ | |

### Beispiel 3

In einen Rührkessel von 30 l Nutzvolumen wurden 1668 g Natronlauge mit einem Gehalt von 300 g/l, was 41.7 mol NaOH entspricht gegeben. Zu dieser Natronlauge wurden 0.42 mol Si als Wasserglaslösung mit einem Gehalt von 170 g Si/l gegeben.

Nach Einschalten der Stickstoffbegasung und des Rührers wurde die Lösung auf 70°C aufgeheizt. In 37 Minuten wurden anschließend 14.72 l Eisen-II-sulfatlösung mit einem Gehalt von 75.9 g Fe/l zugepumpt. Die Fällgeschwindigkeit betrug demnach 0.778 mol Fe/h·mol NaOH. Der Fe-III-Gehalt der Eisensulfatlösung entsprach 0.61 mol-% Fe-III.

Nach Beendigung der Zugabe stellte sich ein pH-Wert von 7.4 (gemessen bei 70°C) ein. Dann wurde die Stickstoffbegasung abgestellt und mit 40 l/h Luft über einen unter dem Rührer angebrachten Begasungsring begast. Die Begasung wurde nach 519 min, nachdem ein Fe-III-Gehalt von 67.0 mol-% erreicht war, abgebrochen. Die Oxidationsgeschwindigkeit betrug demnach 11.56 mol-% Fe-II/h.

Nach Beendigung dieser Reaktion wurde die Suspension filtriert, mit vollentsalztem Wasser gründlich gewaschen und bei 80°C unter Luft getrocknet. Das erhaltene Pulver wurde in einer Prallmühle gemahlen.

Der erhaltene Magnetit hatte folgende Eigenschaften:

| | | |
|---|---|---|
| Si-Gehalt | 0.8 Gew-% | |
| Koerzitivkraft | 45 Oe | ≙ 3.58 KA/m |
| spez. Remanenz | 35 Gcm³/g | ≙ 3.5 nTm³/g |
| spez. Sättigungsmagnetisierung | 1111 Gcm³/g | ≙ 111.1 nTm³/g |
| Teilchengröße | 0.1 µm | |
| BET-Oberfläche | 9.0 m²/g | |
| Schüttdichte | 1.22 g/cm³ | |

### Beispiel 4

In einen Rührkessel von 30 l Nutzvolumen wurden 1668 g Natronlauge mit einem Gehalt von 300 g/l, was 41.7 mol NaOH entspricht gegeben. Zu dieser Natronlauge werden 0.42 mol Si als Wasserglaslösung mit einem Gehalt von 170 g Si/l gegeben.

Nach Einschalten der Stickstoffbegasung und des Rührers wurde die Lösung auf 65°C aufgeheizt. In 45 Minuten wurden anschließend 13.52 l Eisen-II-sulfatlösung mit einem Gehalt von 85.0 g Fe/l zugepumpt. Die Fällgeschwindigkeit betrug demnach 0.666 mol Fe/h·mol NaOH. Der Fe-III-Gehalt der Eisensulfatlösung entsprach 0.47 mol-% Fe-III.

Nach Beendigung der Zugabe stellte sich ein pH-Wert von 7.3 (gemessen bei 70°C) ein. Dann wurde die Stickstoffbegasung abgestellt und mit 40 l/h Luft über einen unter dem Rührer angebrachten Begasungsring begast. Die Begasung wurde nach 495 min abgebrochen nachdem ein Fe-III-Gehalt von 67.0 mol-% erreicht war. Die Oxidationsgeschwindigkeit betrug demnach 12.12 mol-% Fe-II/h.

Nach Beendigung dieser Reaktion wurde die Suspension filtriert, mit vollentsalztem Wasser gründlich gewaschen und bei 80°C unter Luft getrocknet. Das erhaltene Pulver wurde in einer Prallmühle gemahlen.

Der erhaltene Magnetit hatte folgende Eigenschaften:

| | | |
|---|---|---|
| Si-Gehalt | 0.8 Gew-% | |
| Koerzitivkraft | 65 Oe | ≙ 5.17 KA/m |
| spez. Remanenz | 59 Gcm³/g | ≙ 5.9 nTm³/g |
| spez. Sättigungsmagnetisierung | 1067 Gcm³/g | ≙ 106.7 nTm³/g |
| Teilchengröße | 0.1 µm | |
| BET-Oberfläche | 10.7 m²/g | |
| Schüttdichte | 1.20 g/cm³ | |

### Vergleichsbeispiel 1

In einen Rührkessel von 30 l Nutzvolumen wurden 1668 g Natronlauge mit einem Gehalt von 300 g/l, was 41.7 mol NaOH entspricht gegeben. Zu dieser Natronlauge werden 0.42 mol Si als Wasserglaslösung mit einem Gehalt von 170 g Si/l gegeben.

Nach Einschalten der Stickstoffbegasung und des Rührers wurde die Lösung auf 90°C aufgeheizt. In 37 Minuten wurden anschließend 14.72 l Eisen-II-sulfatlösung mit einem Gehalt von 75.9 g Fe/l zugepumpt. Die Fällgeschwindigkeit betrug demnach 0.778 mol Fe/h·mol NaOH. Der Fe-III-Gehalt der Eisensulfatlösung entsprach 0.61 mol-% Fe-III.

Nach Beendigung der Zugabe stellte sich ein pH-Wert von 7.1 (gemessen bei 90°C) ein. Dann wurde die Stickstoffbegasung abgestellt und mit 40 l/h Luft über einen unter dem Rührer angebrachten Begasungsring begast. Die Begasung wurde nach 531 min, nachdem ein Fe-III-Gehalt von 67.4 mol-% erreicht war, abgebrochen. Die Oxidationsgeschwindigkeit betrug demnach 11.30 mol-% Fe-II/h.

Nach Beendigung dieser Reaktion wurde die Suspension filtriert, mit vollentsalztem Wasser gründlich gewaschen und bei 80°C unter Luft getrocknet. Das erhaltene Pulver wurde in einer Prallmühle gemahlen.

Der erhaltene Magnetit hatte folgende Eigenschaften:

| | | |
|---|---|---|
| Si-Gehalt | 0.8 Gew-% | |
| Koerzitivkraft | 31 Oe | ≙ 2.47 KA/m |
| spez. Remanenz | 27 Gcm³/g | ≙ 2.7 nTm³/g |
| spez. Sättigungsmagnetisierung | 1093 Gcm³/g | ≙ 109.3 nTm³/g |
| Teilchengröße | 0.2 µm | |
| BET-Oberfläche | 7.2 m²/g | |
| Schüttdichte | 1.08 g/cm³ | |

Dieses Material ist für die Herstellung feinteiliger Toner aufgrund seiner Teilchengröße nur noch bedingt geeignet, d.h. die Auflösung ist gegenüber Tonern, die mit feinteiligeren Magnetiten hergestellt wurden schlechter.

### Vergleichsbeispiel 2

In einen Rührkessel von 30 l Nutzvolumen wurden 1860 g Natronlauge mit einem Gehalt von 300 g/l, was 46.5 mol NaOH entspricht gegeben. Zu dieser Natronlauge werden 0.42 mol Si als Wasserglaslösung mit einem Gehalt von 170 g Si/l gegeben.

Nach Einschalten der Stickstoffbegasung und des Rührers wurde die Lösung auf 90°C aufgeheizt. In 37 Minuten wurden anschließend 15.19 l Eisen-II-sulfatlösung mit einem Gehalt von 73.9 g Fe/l zugepumpt. Die Fällgeschwindigkeit betrug demnach 0.700 mol Fe/h·mol NaOH. Der Fe-III-Gehalt der Eisensulfatlösung entsprach 0.61 mol-% Fe-III.

Nach Beendigung der Zugabe stellte sich ein pH-Wert von 11.9 (gemessen bei 90°C) ein. Dann wurde die Stickstoffbegasung abgestellt und mit 40 l/h Luft über einen unter dem Rührer angebrachten Begasungsring begast. Die Begasung wurde nach 702 min, nachdem ein Fe-III-Gehalt von 67.0 mol-% erreicht war, abgebrochen. Die Oxidationsgeschwindigkeit betrug demnach 8.54 mol-% Fe-II/h.

Nach Beendigung dieser Reaktion wurde die Suspension filtriert, mit vollentsalztem Wasser gründlich gewaschen und bei 80°C unter Luft getrocknet. Das erhaltene Pulver wurde in einer Prallmühle gemahlen.

Der erhaltene Magnetit hatte folgende Eigenschaften:

| | |
|---|---|
| Si-Gehalt: | 0.8 Gew-% |
| Koerzitivkraft: | 34 Oe ≙ 2.70 KA/m |
| spez. Remanenz: | 35 Gcm³/g ≙ 3.5 nTm³/g |
| spez. Sättigungsmagnetisierung: | 1175 Gcm³/g ≙ 117.5 nTm³/g |
| Teilchengröße: | 0.5 µm |
| BET-Oberfläche: | 2.8 m²/g |
| Schüttdichte: | 0.45 g/cm³ |

Dieser Magnetit ist für die Herstellung feinteiliger Toner aufgrund seiner hohen Teilchengröße nicht mehr geeignet.

## Patentansprüche

1. Verfahren zur Herstellung eines Magnetits mit einer spezifischen Oberfläche von 9 bis 15 m²/g, einer Koerzitivkraft von 45 Oe ≙ 3.58 KA/m bis 75 Oe ≙ 5.97 KA/m, einer Teilchengröße von 0,1 µm und einer Schüttdichte von 1.1 bis 1.3 g/cm³, **dadurch gekennzeichnet, dass**
a. eine alkalischen Komponente in Form einer wässrigen Lösung unter Schutzgas vorgelegt wird,
b. eine Silikatkomponente in einer Menge von 1.0 - 3.0 mol-% Si, bezogen auf Fe, zugegeben wird,
c. auf eine Fälltemperatur von 65 - 80 °C, bevorzugt auf 65 - 75 °C aufgeheizt wird,
d. eine Eisen-II-komponente mit einer Geschwindigkeit von 0.5 bis 1.5 mol Fe/h pro Äquivalent des Fällungsmittels bis zu einem pH-Wert der Suspension von 7.0 - 8.5, bevorzugt 7.2 - 7.6, zugegeben wird,
e. die Oxidation der Suspension mit einem Oxidationsmittel mit einer Geschwindigkeit von 20 - 5 mol-% Fe-II/h, bevorzugt 14 - 10 mol-% Fe-II/h, bis zu einem Fe-III-Gehalt von 65 - 75 mol-% Fe-III durchgeführt wird.

2. Verfahren gemäß Anspruch 1, **dadurch gekennzeichnet, dass** die Silicatkomponente (b) in einer Menge von 1.7 - 2.5 mol-% Si, bezogen auf Fe, zugegeben wird.

3. Verfahren gemäß Ansprüchen 1 bis 2, **dadurch gekennzeichnet, dass** der Fe-Gehalt der Eisen-II-komponente zwischen 60 und 180 g/l Fe liegt.

4. Verfahren gemäß Ansprüchen 1 bis 2, **dadurch gekennzeichnet, dass** der Fe-Gehalt der Eisen-II-komponente zwischen 65 und 120 g/l Fe liegt.

5. Verfahren gemäß Ansprüchen 1 bis 2, **dadurch gekennzeichnet, dass** der Fe-Gehalt der Eisen-II-komponente zwischen 80 und 95 g/l Fe liegt.

6. Verfahren gemäß Ansprüchen 1 bis 5, **dadurch gekennzeichnet, dass** der Fe-III-Gehalt der Eisen-II-komponente zwischen 0.2 und 1.2 mol-% Fe-III liegt.

7. Verfahren gemäß Ansprüchen 1 bis 5, **dadurch gekennzeichnet, dass** der Fe-III-Gehalt der Eisen-II-komponente zwischen 0.3 und 0.6 mol-% Fe-III, liegt.

8. Verfahren gemäß Ansprüchen 1 bis 7, **dadurch gekennzeichnet, dass** als Eisen-II-komponente Eisen-II-sulfat oder Eisen-II-chlorid eingesetzt wird.

9. Verfahren gemäß Ansprüchen 1 bis 8, **dadurch gekennzeichnet, dass** als alkalische Komponente Ammoniak, Alkalimetallhydroxide, Erdalkalimetallhydroxide, Alkalimetallcarbonate oder MgCO₃ eingesetzt wird.

10. Verfahren gemäß Anspruch 1 bis 9, **dadurch gekennzeichnet, dass** als Oxidationsmittel Luftsauerstoff, H₂O₂, Chlor, Alkalimetallchlorate oder Nitrate eingesetzt werden.

## Claims

1. Method of producing a magnetite having a specific surface area of 9 to 15 m²/g, a coercivity of 45 Oe ≙ 3.58 KA/m to 75 Oe ≙ 5.97 KA/m, a particle size of 0.1 µm and a settled apparent density of 1.1 to 1.3 g/cm³, **characterized in that** it comprises
a. initially charging an alkaline component in the form of an aqueous solution under a protective gas,
b. adding a silicate component in an amount of 1.0 - 3.0 mol% of Si, relative to Fe,
c. heating to a precipitation temperature of 65 - 80°C and preferably to 65 - 75°C,
d. adding an iron(II) component at a rate of 0.5 to 1.5 mol of Fe/h per equivalent of the precipitant until the pH of the suspension is 7.0 - 8.5 and preferably 7.2 - 7.6,
e. oxidizing the suspension with an oxidizing agent at a rate of 20 - 5 mol% of Fe(II)/h, preferably 14 - 10 mol% Fe(II)/h, up to an Fe(III) content of 65 - 75 mol% of Fe(III).

2. Method according to Claim 1, **characterized in that** the silicate component (b) is added in an amount of 1.7 - 2.5 mol% of Si, relative to Fe.

3. Method according to Claims 1 to 2, **characterized in that** the Fe content of the iron(II) component is between 60 and 180 g/l of Fe.

4. Method according to Claims 1 to 2, **characterized in that** the Fe content of the iron(II) component is between 65 and 120 g/l of Fe.

5. Method according to Claims 1 to 2, **characterized in that** the Fe content of the iron(II) component is between 80 and 95 g/l of Fe.

6. Method according to Claims 1 to 5, **characterized in that** the Fe(III) content of the iron(II) component is between 0.2 and 1.2 mol% of Fe(III).

7. Method according to Claims 1 to 5, **characterized in that** the Fe(III) content of the iron(II) component is between 0.3 and 0.6 mol% of Fe(III).

8. Method according to Claims 1 to 7, **characterized in that** iron(II) sulphate or iron(II) chloride is used as iron(II) component.

9. Method according to Claims 1 to 8, **characterized in that** the alkaline component used is ammonia, alkali metal hydroxides, alkaline earth metal hydroxides, alkali metal carbonates or MgCO₃.

10. Method according to Claim 1 to 9, **characterized in that** the oxidizing agent used is atmospheric oxygen, H₂O₂, chlorine, alkali metal chlorates or nitrates.

## Revendications

1. Procédé de préparation d'une magnétite avec une surface spécifique de 9 à 15 m²/g, une force coercitive de 45 Oe = 3,58 KA/m à 75 Oe ≈ 5,97 KA/m, une taille des particules d'environ 0,1 µm et une masse volumique apparente de 1,1 à 1,3 g/cm³, **caractérisé en ce que**
a. un composant alcalin est disposé sous forme d'une solution aqueuse sous gaz protecteur,
b. un composant silicate est ajouté, en une quantité de 1,0 à 3,0% en moles de Si, sur base du Fe,
c. on chauffe à une température de précipitation de 65-80°C, de préférence de 65-75°C,
d. on ajoute un composant du fer (II) avec une vitesse de 0,5 à 1,5 mole Fe/heure par équivalent d'agent de précipitation jusqu'à un pH de la suspension de 7,0 à 8,5, de préférence de 7,2 à 7,6,
e. l'oxydation de la suspension est réalisée avec un agent d'oxydation avec une vitesse de 20-5% en moles de Fe (II)/heure, de préférence de 14 à 10% en moles Fe (II)/heure, jusqu'à une teneur en Fe (III) de 65-75% en moles de Fe (III).

2. Procédé selon la revendication 1, **caractérisé en ce que** le composant silicate (b) est ajouté en une quantité de 1,7-2,5% en moles de Si, sur base du Fe.

3. Procédé selon les revendications 1 et 2, **caractérisé en ce que** la teneur Fe du composant de fer (II) se situe dans l'intervalle allant de 60 à 180 g/litre.

4. Procédé selon les revendications 1 et 2, **caractérisé en ce que** la teneur Fe du composant de fer (II) se situe dans l'intervalle allant de 65 à 120 g/litre.

5. Procédé selon les revendications 1 et 2, **caractérisé en ce que** la teneur Fe du composant de fer (II) se situe dans l'intervalle allant de 80 à 95 g/litre.

6. Procédé selon les revendications 1 à 5, **caractérisé en ce que** la teneur Fe (III) du composant de fer (II) se situe dans l'intervalle allant de 0,2 à 1,2% en moles de Fe (III).

7. Procédé selon les revendications 1 à 5, **caractérisé en ce que** la teneur Fe (III) du composant de fer (II) se situe dans l'intervalle allant de 0,3 à 0,6% en moles de Fe (III).

8. Procédé selon les revendications 1 à 7, **caractérisé en ce que** l'on met en oeuvre comme composant de fer (II), du sulfate de fer (II) ou du chlorure de fer (II).

9. Procédé selon les revendications 1 à 8, **caractérisé en ce que** comme composant alcalin, on met en oeuvre l'ammoniaque, un hydroxyde de métal alcalin, un hydroxyde de métal alcalino-terreux, un carbonate de métal alcalin ou MgCO₃.

10. Procédé selon les revendications 1 à 9, **caractérisé en ce que** comme agent d'oxydation, on met en oeuvre l'oxygène de l'air, H₂O₂, le chlore, un chlorate de métal alcalin ou un nitrate.
